(19) Europäisches Patentamt
European Patent Office
Office européen des brevets

(11) Veröffentlichungsnummer: **0 003 317**
**B1**

(12) **EUROPÄISCHE PATENTSCHRIFT**

(45) Veröffentlichungstag der Patentschrift: **22.04.81**

(51) Int. Cl.³: **C 07 F 7/18**

(21) Anmeldenummer: **79100134.0**

(22) Anmeldetag: **17.01.79**

# (54) Verfahren zum Herstellen von Acyloxysilanen und gegebenenfalls Acyloxysiloxanen.

(30) Priorität: **17.01.78 DE 2801780**

(43) Veröffentlichungstag der Anmeldung:
**08.08.79 Patentblatt 79/16**

(45) Bekanntmachung des Hinweises auf die Patenterteilung:
**22.04.81 Patentblatt 81/16**

(84) Benannte Vertragsstaaten:
**BE DE FR GB**

(56) Entgegenhaltungen:
**CH - A - 580 108**
**GB - A - 1 130 074**

**CHEMICAL ABSTRACTS, Vol. 77, 11. Dezember 1972, Nr. 24, Columbus, Ohio, USA HASHIAKI ICHIRO et al.: "Room-temperature-curable silicone elastomer compositions", Seite 70, linke Spalte, Zusammenfassung Nr. 153525q**

(73) Patentinhaber: **WACKER-CHEMIE GMBH**
**Prinzregentenstrasse 22**
**D-8000 München 22 (DE)**

(72) Erfinder: **John, Peter, Dr.**
**Marienberger Strasse 80**
**D-8263 Burghausen (DE)**
Erfinder: **Feichtner, Wolfgang**
**Holzgassen 64**
**A-5122 Ach (AT)**
Erfinder: **Graf, Werner, Dr.**
**Ludwig-Thoma-Strasse 21**
**D-8263 Burghausen (DE)**
Erfinder: **Frey, Volker, Dr.**
**Asternweg 7 a**
**D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 003 317 B1

Verfahren zum Herstellen von Acyloxysilanen und gegebenenfalls Acyloxysiloxanen.

Verfahren zum Herstellen von Acyloxysilanen und Acyloxysiloxanen durch Umsetzen von Chlorsilan mit aliphatischer Carbonsäure bei erhöhter Temperatur in einer Kolonne sind bereits bekannt. Gegenüber diesem z.B. aus US—PS 3 974 198 (ausgegeben 10. August 1976, B.A. Ashby assignor to General Electric Company) bekannten Verfahren zum Herstellen von Acyloxysilanen hat das erfindungsgemäße Verfahren insbesondere die Vorteile, daß es auch ohne Ausschluß von Eisen bzw. auch ohne Mitverwendung von Eisenkomplexbildner und ohne Mitverwendung von Lösungsmitteln, für deren Einsatz zusätzlicher Aufwand erforderlich ist, innerhalb kurzer Zeit und mit ausgezeichneten Ausbeuten Acyloxysilane mit sehr geringem Gehalt an Acyloxysiloxanen ergibt.

Gegenüber dem ebenfalls aus US—PS 3 974 198 bekannten Verfahren zum Herstellen von Acyloxysiloxanen durch Umsetzen von Chlorsilan mit aliphatischer Carbonsäure in Gegenwart von Eisen in einer Kolonne, hat das erfindungsgemäße Verfahren zum Herstellen von Acyloxysiloxanen insbesondere den Vorteil, daß die danach hergestellten Acyloxysiloxane nicht mit Eisenverbindungen, die zu unerwünschten Färbungen führen können, verunreinigt sind.

Gegenüber dem Verfahren gemäß Referat 15 35 25q von Chemical Abstracts, Band 77, 1972, Seite 70, wonach Acyloxysiloxane durch Teilhydrolyse von Acyloxysilanen in Tetrahydrofuran hergestellt werden, hat das erfindungsgemäße Verfahren z.B. die Vorteile, daß die Mitverwendung des verhältnismäßig schwer zugänglichen Tetrahydrofurans und ebenso wie bei dem Verfahren gemäß US—PS 3 974 198 der Aufwand für eine getrennte Herstellung von Acyloxysilan nicht erforderlich ist.

Gegenstand der Erfindung ist ein Verfahren zum Herstellen von Acyloxysilanen und gegebenenfalls Acyloxysiloxanen durch Umsetzen von Chlorsilan mit aliphatischer Carbonsäure bei erhöhter Temperatur in einer Kolonne, dadurch gekennzeichnet, daß aliphatische Carbonsäure in verdampfter Form von unten nach oben Chlorsilan entgegenführt, aliphatische Carbonsäure in Mengen von höchstens 1,3 Mol je Grammatom Si-gebundenen Chlors im Chlorsilan und im Maße ihres Verbrauchs durch die Umsetzung mit Chlorsilan in die Kolonne eingeführt wird, bei Herstellung von Acyloxysiloxanen zusätzlich zu Carbonsäure und Chlorsilan bis zu 10 Gewichstprozent, bezogen auf das Gewicht der Carbonsäure, Wasser in die Kolonne eingeführt werden, und am unteren Ende der Kolonne Acyloxysilan und/oder Acyloxysiloxan ablaufen gelassen wird.

Als Chlorsilane sind im Rahmen der Erfindung solche der allgemeinen Formel

$$R_aSiCl_{4-a},$$

worin R gleiche oder verschiedene, einwertige gegebenenfalls substituierte Kohlenwasserstoffreste mit 1 bis 8 Kohlenstoffatomen und a 0, 1, 2 oder 3 bedeutet, bevorzugt.

Beispiele für Kohlenwasserstoffreste R sind Alkylreste, wie der Methyl-, Äthyl-, Isopropyl-, sec.-Butyl- und 2-Äthylhexylrest; Alkenylreste, wie der Vinyl- und Allylrest, sowie Hexadienylreste; Cycloalkylreste, wie der Cyclopentenyl- und Cylcohexylrest; Cycloalkenylreste, wie Cyclopentyl-, Cyclohexenyl- und Äthylcyclohexenylreste; aromatische Kohlenwasserstoffreste, wie der Phenylrest; Aralkylreste, wie der Benzyl- und Phenyläthylrest; und Alkarylreste, wie Tolyl- und Dimethylphenylreste. Als substituierte Kohlenwasserstoffreste R sind halogenierte Kohlenwasserstoffreste bevorzugt. Als Beispiele für halogenierte Kohlenwasserstoffreste seien der Chlormethyl-, 3-Chlorpropyl und 3,3,3-Trifluorpropylrest genannt.

Die im Rahmen des erfindungsgemäßen Verfahrens eingesetzten Chlorsilane müssen nicht unbedingt solche der oben angegebenen Formel sein. Sie können vielmehr auch z.B. solche der allgemeinen Formel

$$Cl_{3-b}SiR_bR^1R_bSiCl_{3-b},$$

worin R die oben dafür angegebene Bedeutung hat, $R^1$, ein zweiwertiger Kohlenwasserstoffrest, z.B. ein Äthylen- oder Phenylenrest und b 1 oder 2 ist, sein.

Die im Rahmen des erfindungsgemäßen Verfahrens eingesetzten Carbonsäuren können Essigsäure, Propionsäure, Buttersäure oder Dimethylessigsäure sein.

Vorzugsweise wird aliphatische Carbonsäure in Mengen von mindestens 1 Mol je Grammatom Si-gebundenen Chlors im Chlorsilan eingesetzt.

Vorzugsweise wird die Dosierung von in die Kolonne eingeführter Carbonsäure durch eine durch die Temperatur im unteren Drittel der Kolonne gesteuerte Vorrichtung geregelt.

Als Kolonne kann im Rahmen des erfindungsgemäßen Verfahrens jedes, meist mit Füllungen oder Einbauten versehene Rohr verwendet werden, das auch bei der fraktionierten Destillation zum Fraktionieren eingesetzt werden kann, beispielsweise eine Füllkörperkolonne. Vorzugsweise wird Chlorsilan mindestens 90 cm oberhalb der Einführungsstelle von Carbonsäure in die Kolonne eingeführt. Das bedeutet, daß auch die Kolonne vorzugsweise mindestens 90 cm lang ist. Die obere Grenze der Kolonnenlänge ist lediglich eine Frage der Wirtschaftlichkeit.

Bei dem erfindungsgemäßen Verfahren kann die Umsetzung von Chlorsilan mit aliphatischer Carbonsäure beim Druck der umgebenden Atmosphäre, also bei 760 mm Hg (abs.) oder etwa 760 mm Hg (abs.), durchgeführt werden.

Um jedoch Acyloxysilane und/oder Acyloxysiloxane mit keinem oder besonders geringem Gehalt an nicht-umgesetzter Carbonsäure und Chlorwasserstoff zu erhalten, ist es bevorzugt, diese Umsetzung bei 13 bis 800 m Bar (abs.), insbesondere 65 bis 400 m Bar (abs.), durchzuführen.

Die erhöhte Temperatur bei der Umsetzung von Chlorsilan mit aliphatischer Carbonsäure ist selbstverständlich diejenige, oder etwa diejenige des Siedepunkts der jeweils eingesetzten Carbonsäure unter den jeweils angewandten Druckbedingungen.

Wird bei dem erfindungsgemäßen Verfahren Wasser mitverwendet, um Acyloxysiloxane herzustellen, so kann dieses Wasser an einer beliebigen Stelle in die Kolonne eingeführt werden, an der die Bildung fester Hydrolysate ausgeschlossen ist. Vorzugsweise wird es jedoch im Gemisch mit der Carbonsäure eingesetzt. Wird bei dem erfindungsgemäßen Verfahren Wasser mitverwendet, so wird es vorzugsweise in Mengen von mindestens 0,5 Gewichtsprozent, bezogen auf die jeweils eingesetzte Menge an Carbonsäure, eingesetzt.

Die Mitverwendung von gegenüber den Reaktionsteilnehmern inertem Lösungsmittel ist weder erwünscht noch erforderlich, aber auch keineswegs ausgeschlossen. Beispiele für bei dem erfindungsgemäßen Verfahren mitverwendbare Lösungsmittel sind Toluol und Methylenchlorid.

Vorzugsweise wird das erfindungsgemäße Verfahren kontinuierlich durchgeführt.

Die erfindungsgemäß hergestellten Acyloxysilane haben die allgemeine Formel

$$R_aSi(OCOR')_{4-a},$$

worin R und a jeweils die oben dafür angegebene Bedeutung haben, und R' der Methyl-, Äthyl-, Propyl- oder Isopropylrest ist, wenn als Chlorsilan solches der allgemeinen Formel

$$R_aSiCl_{4-a}$$

eingesetzt wurde.

Die erfindungsgemäß hergestellten Acyloxysilane und Acyloxysiloxane können überall dort eingesetzt werden, wo auch bisher Acyloxysilane und Acyloxysiloxane eingesetzt werden konnten, also insbesondere mit in den endständigen Einheiten je eine Si-gebundene Hydroxlgruppe aufweisenden Diorganopolysiloxanen vermischt werden, um unter Ausschluß von Wasser lagerfähige, bei Zutritt von Wasser bei Raumtemperatur zu Elastomeren härtende Massen herzustellen.

Beispiel 1

Es wird als Kolonne ein 3,5 m langes Glasrohr mit 100 mm Innendurchmesser, das mit Raschigringen mit einem Durchmesser von 8 mm gefüllt ist, verwendet. Der Kopf der Kolonne mündet in einen Rückflußkühler, der mit eine Temperatur von −20°C aufweisender wäßriger Lösung von Natriumchlorid betrieben wird. Etwa in der Mitte der Kolonne werden je Stunde 400 ml Äthyltrichlorsilan eingeleitet. Kurz über dem unteren Ende der Kolonne werden je Stunde 550 ml Eisessig in die Kolonne eingeführt, wobei durch ein Steuerelement, das mit einer Temperaturfühlvorrichtung verbunden ist, durch Aus- bzw. Anschalten der Pumpe, welche den Eisessig in die Kolonne fördert, die Temperatur in einem elektrisch mit gleichbleibender Energiezufuhr beheizten Umlaufverdampfer bei etwa 135°C gehalten wird. Der Druck in der Kolonne beträgt 160 m Bar (abs.), so daß der Eisessig sofort nach dem Einführen in die Kolonne verdampft und dem Äthyltrichlorsilan entgegensteigt.

Am unteren Ende wird stetig Äthyltriacetoxysilan abgezogen.

| | |
|---|---|
| Ausbeute: | 98 Gewichtsprozent d.Th. |
| Gehalt an Äthyltriacetoxysilan: | 94 Gewichtsprozent |
| Gehalt an Essigsäure: | 2 Gewichtsprozent |
| Gehalt an HCl: | weniger als 50 Gewichts-ppm |

Beispiel 2

Es wird als Kolonne ein 3,5 m langes Glasrohr mit 100 mm Innendurchmesser, das mit Raschigringen mit einem Durchmesser von 8 mm gefüllt ist, verwendet. Der Kopf der Kolonne mündet in einen Rückflußkühler, der mit eine Temperatur von −20°C aufweisender wäßriger Lösung von Natriumchlorid betrieben wird. Etwa in der Mitte der Kolonne werden je Stunde 250 ml Methyltrichlorsilan eingeleitet. Kurz über dem unteren Ende der Kolonne werden je Stunde 220 ml Essigsäure, die 4 Gewichtsprozent, bezogen auf ihr Gewicht, Wasser enthält, in die Kolonne eingeführt, wobei durch ein Steuerelement, das mit einer Temperaturfühlvorrichtung verbunden ist, durch Aus- bzw. Anschalten der Pumpe, welche die Essigsäure in die Kolonne befördert, die Temperatur in einem elektrisch mit gleichbleibender Energiezufuhr beheizten Umlaufverdampfer bei etwa 130°C gahalten wird. Der Druck der Kolonne beträgt 180 m Bar (abs.), so daß die Essigsäure sofort nach dem Einführen in die Kolonne verdampft und dem Methylrichlorsilan entgegensteigt.

Am unteren Ende der Kolonne wird stetig ein bei Raumtemperatur nicht kristallisierendes Gemisch aus Methylacetoxysiloxanen, dessen Hauptbestandteile 1,3-Dimethyl-1,1,3,3-tetraacetoxydisiloxan ist, abgezogen.

Beispiel 3

Die in Beispiel 1 beschriebene Arbeitsweise wird wiederholt mit der Abänderung, daß als Eisessig solcher verwendet wird, der mit 100 ppm $FeCl_3$ verunreinigt ist. Auch hier beträgt die Ausbeute 98 Gewichtsprozent d. Th. Der Gehalt des Produktes an Äthyltriacetoxysilan ist nur unwesentlich, nämlich auf 92,5 Gewichtsprozent, gesunken.

**Patentansprüche**

1. Verfahren zum Herstellen von Acyloxysilanen und gegebenenfalls Acyloxysiloxanen durch Umsetzen von Chlorsilan mit aliphatischer Carbonsäure bei erhöhter Temperatur in einer Kolonne, dadurch gekennzeichnet, daß aliphatische Carbonsäure in verdampfter Form von unten nach oben Chlorsilan entgegengeführt, aliphatische Carbonsäure in Mengen von höchstens 1,3 Mol je Grammatom Si-gebundenen Chlors im Chlorsilan und im Maße ihres Verbrauchs durch die Umsetzung mit Chlorsilan in die Kolonne eingeführt wird, bei Herstellung von Acyloxysiloxan zusätzlich zu Carbonsäure und Chlorsilan bis zu 10 Gewichtsprozent, bezogen auf das Gewicht der Carbonsäure, Wasser in die Kolonne eingeführt werden, und am unteren Ende der Kolonne Acyloxysilan und/oder Acyloxysiloxan ablaufen gelassen wird.

2. Verfahren nach Anspruch 1, dadurch gekennzeichnet, daß die Dosierung von in die Kolonne eingeführter Carbonsäure durch eine durch die Temperatur im unteren Drittel der Kolonne gesteuerte Vorrichtung geregelt wird.

3. Verfahren nach Anspruch 1, dadurch gekennzeichnet, daß die Umsetzung von Chlorsilan mit aliphatischer Carbonsäure bei 65 bis 400 m Bar (abs.), durchgeführt wird.

4. Verfahren nach Anspruch 1, dadurch gekennzeichnet, daß mitverwendetes Wasser im Gemisch mit der Carbonsäure eingesetzt wird.

**Revendications**

1. Procédé de préparation d'acyloxysilanes et, éventuellement, d'acyloxysiloxanes par réaction d'un chlorosilane avec un acide carboxylique aliphatique, à température élevée, dans une colonne, procédé caractérisé en ce qu'on fait passer l'acide carboxylique aliphatique à l'état de vapeur, de bas en haut, en sens inverse du chlorosilane, on introduit dans la colonne l'acide carboxylique aliphatique en des quantités d'au plus 1,3 mole par atome-gramme de chlore lié au silicium dans le chlorosilane et à proportion de sa consommation par la réaction avec le chlorosilane, on introduit dans la colonne, en plus de l'acide carboxylique et du chlorosilane, si l'on veut préparer un acyloxysiloxane, jusqu'à 10% en poids d'eau par rapport au poids de l'acide carboxylique, et on soutire à la partie inférièure de la colonne l'acyloxysilane et/ou l'acyloxysiloxane.

2. Procédé selon la revendication 1, caractérisé en ce que l'alimentation de la colonne en acide carboxylique est réglée par un dispositif commandée par la température régnant dans le tiers inférieur de la colonne.

3. Procédé selon la revendication 1, caractérisé en ce que la réaction du chlorosilane avec l'acide carboxylique aliphatique est effectuée sous une pression (absolue) de 6,5 à 40,0 kPa.

4. Procédé selon la revendication 1, caractérisé en ce que, si l'on fait en même temps usage d'eau, celle-ci est mise en jeu en mélange avec l'acide carboxylique.

**Claims**

1. Process for the production of acyloxysilanes and, optionally, acyloxysiloxanes by reacting chlorosilane with an aliphatic carboxylic acid at an elevated temperature in a column, characterised in that the aliphatic carboxylic acid in vapourised form is conveyed from below upwards in countercurrent to the chlorosilane, that the aliphatic carboxylic acid is introduced into the column in amounts not exceeding 1.3 moles per gram atom of Si-bonded chlorine in the chlorosilane to the extent of its consumption by the reaction with the chlorosilane, that, when producing acyloxysiloxanes, up to 10% by weight of water, based on the weight of the carboxylic acid, is introduced into the column in addition to the carboxylic acid and the chlorosilane, and that the acyloxysilane and/or acyloxysiloxane is discharged from the lower end of the column.

2. Process according to claim 1, characterised in that the amount of carboxylic acid metered into the column is regulated by means of a device controlled by the temperature in the lower one-third of the column.

3. Process according to claim 1, characterised in that the reaction of the chlorosilane with the aliphatic carboxylic acid is carried out at from 65 to 400 mbar (abs.).

4. Process according to claim 1, characterised in that the water used is introduced in admixture with the carboxylic acid.